# EUROPÄISCHE PATENTANMELDUNG

(11) **EP 3 534 475 A1**
(43) Veröffentlichungstag der Anmeldung: **04.09.2019**
(21) Anmeldenummer: 19160205.1
(22) Anmeldetag: 01.03.2019
(51) Int. Cl.: H02G 3/12

(54) **VORRICHTUNG ZUM EINBAU VON ELEKTRISCHEN INSTALLATIONSGERÄTEN**

(30) Priorität: 02.03.2018 DE 102018104820
(71) Anmelder: Schulte-Elektrotechnik GmbH & Co. KG, 58515 Lüdenscheid (DE)
(72) Erfinder: Rittinghaus, Hendrik, 58579 Schalksmühle (DE); Menges, Jürgen, 58553 Halver (DE)
(74) Vertreter: Patentanwälte Dörner & Kötter PartG mbB

(57) **Zusammenfassung**

Vorrichtung zum Einbau von elektrischen Installationsgeräten, umfassend einen Einbaudose (5), die von einer Mantelfläche gebildet ist und auf ihrer einen Seite mit einem umlaufenden Kragen (52) versehen ist sowie außen mit Befestigungsmitteln (6) versehen ist, wobei eine Ringscheibe (7) vorgesehen ist, die mit einem umlaufenden Rand (72) versehen ist, welcher mit dem Kragen (52) korrespondiert.

## Beschreibung

Die Erfindung betrifft eine Vorrichtung zum Einbau von elektrischen Installationsgeräten, umfassend einen Einbaudose, die von einer Mantelfläche gebildet ist und auf ihrer einen Seite mit einem umlaufenden Kragen versehen ist sowie außen mit Befestigungsmitteln versehen ist.

Bei den elektrischen Installationsgeräten der hier betrachteten Art handelt es sich um Stecker, Steckdosen, Schalter, Informationsanschlüsse und dergleichen. Vorrichtungen zum Einbau solcher elektrischer Installationsgeräte sind in vielfältiger Weise bekannt, bspw. aus der DE 10 2016 213 716 A1. Sie finden Anwendung, um die Installationsgeräte in Wänden von Gebäuden, Möbeln, Küchen, Kraftfahrzeugen usw. zu verbauen. Zum verbesserten Halt solcher Installationsgeräte in der Wand ist es bspw. aus der US 2 562 344 A bekannt, Reihen von Kerben an dem Gehäuse vorzusehen, die nach der Montage in die Wandung des Bohrlochs eingreifen. Zur Vermeidung einer Drehung relativ zur Wand ist aus zudem der US 4 053 082 A eine Anordnung für Steckdosen bekannt, die mit Zähnen versehen ist, welche in die jeweilige Wand fassen.

Die erfindungsgemäße Vorrichtung kann für alle vorgenannten Anwendungen herangezogen werden. Sie ist insbesondere geeignet, bei Möbeln oder Wänden, die mit einer Aufpolsterung versehen sind, verwendet zu werden. Der Bedarf an solchen Vorrichtungen ist in der jüngeren Vergangenheit erheblich gestiegen. Dies hat seine Ursache unter anderem darin, dass insbesondere moderne Sitzmöbel mit vielfältigen Funktionen versehen sind, die den Einbau von elektrischen Installationsgeräten erfordern. Beispielhaft sind hier elektrisch verstellbare Sessel oder Sofas zu nennen, bei denen die Änderung der Neigung der Lehne oder auch der Beinauflage mit Hilfe von in das Sitzmöbel eingelassenen elektrischen Installationsgeräten beispielsweise in Form von Dreh- oder Kippschaltern erfolgt. Aber auch bei aufgepolsterten Wänden, beispielsweise in Besprechungsräumen, ist der Einbau von elektrischen Installationsgeräten in Form von Lichtschaltern, Steckdosen usw. erforderlich.

Um die beschriebenen elektrischen Installationsgeräte an den aufgepolsterten Wänden oder Möbeln montieren zu können ist es zunächst erforderlich, in dem die Polsterung tragenden Unterbau eine Öffnung vorzusehen, wie dies beispielsweise aus Trockenbauwänden erstellten Räumen bekannt ist. Die auf dem Unterbau angeordnete Aufpolsterung wird dann im Bereich der Öffnung durchtrennt, und zwar in der Regel indem ein Kreuz in die Aufpolsterung geschlitzt wird. In die so gebildete Öffnung in der Aufpolsterung sowie in die im Unterbau befindliche Öffnung wird dann eine Vorrichtung zum Einbau von elektrischen Installationsgeräten eingebaut.

Bei der Anbringung solcher elektrischer Installationsgeräte in aufgepolsterten Gegenständen oder Wänden bestehen im Wesentlichen zwei Anforderungen, die erfüllt sein müssen. Zum einen müssen die Installationsgeräte zuverlässig befestigt sein, um ein selbstständiges Lösen zu verhindern. Zum anderen muss gewährleistet sein, dass sich die Aufpolsterung nicht löst oder gar einreißt und dadurch der gewünschte hochwertige optische Eindruck zerstört wird.

Um diesen Anforderungen gerecht zu werden, finden üblicherweise Vorrichtungen Anwendung, die mit einem großflächigen Abdeckrahmen versehen sind. Der Abdeckrahmen wird an der in dem Unterbau eingelassenen Einbaudose befestigt und umgibt die Ansichtsseite der Einbaudose bzw. des elektrischen Installationsgerätes großflächig. Auf diese Weise soll verhindert werden, dass im Falle eines bereichsweisen Lösens der Aufpolsterung der unter der Aufpolsterung befindliche Unterbau sichtbar wird.

Zwar besteht mit Hilfe der bekannten Lösungen die Möglichkeit, das Sichtbarwerden des Unterbaus von aufgepolsterten Gegenständen zu vermeiden; diese Lösung weist jedoch den Nachteil auf, dass großflächige Abdeckrahmen benötigt werden, die in der Herstellung relativ kostenintensiv sind. Zudem weist die Verwendung der großflächigen Abdeckrahmen den Nachteil auf, dass der benötigte Bauraum für den Einbau der elektrischen Installationsgeräte größer ist, als tatsächlich erforderlich. In Folge dessen sind die Einbaumöglichkeiten für die elektrischen Installationsgeräte bei den aus den Stand der Technik bekannten Lösungen begrenzt.

Hier will die Erfindung Abhilfe schaffen. Der Erfindung liegt die Aufgabe zu Grunde, eine Vorrichtung zum Einbau von elektrischen Installationsgeräten zu schaffen, die einerseits eine zuverlässige Anbringung der elektrischen Installationsgeräte ermöglicht und gleichzeitig einen geringen Platzbedarf aufweist sowie die Aufpolsterung sicher hält. Gemäß der Erfindung wird diese Aufgabe dadurch gelöst, dass eine Ringscheibe vorgesehen ist, die mit einem umlaufenden Rand versehen ist, der mit dem Kragen korrespondiert.

Mit der Erfindung ist eine Vorrichtung zum Einbau von elektrischen Installationsgeräten geschaffen, die einen zuverlässigen Halt in den jeweiligen Gegenständen, in denen die Installationsgeräte eingebaut werden sollen, ermöglicht. Gleichzeitig ist die Aufpolsterung sicher von der Vorrichtung gehalten, so dass ein Sichtbarwerden des Unterbaus durch ein Verrutschen oder Einreißen der Aufpolsterung verhindert ist.

In Weiterbildung der Erfindung ist der Rand auf ihrer dem Kragen zugewandten Seite mit Spitzen versehen. Die Spitzen bieten die Möglichkeit, eine verbesserte Klemmwirkung der Aufpolsterung an der Vorrichtung hervorzurufen.

Besonders bevorzugt sind die Spitzen von Ringen gebildet, die sich entlang des Randes erstrecken. Durch diese Lösung ist eine sehr stabile Klemmung der Aufpolsterung an der Vorrichtung und damit ein zuverlässiger Halt geschaffen.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die halbseitige Darstellung einer ersten Einbausituation der erfindungsgemäßen Vorrichtung im Längsschnitt;
- Figur 2: die halbseitige Darstellung einer zweiten Einbausituation der erfindungsgemäßen Vorrichtung im Längsschnitt;
- Figur 3: die dreidimensionale Darstellung der in Figur 1 gezeigten Einbausituation;
- Figur 4: die dreidimensionale Darstellung der in Figur 2 gezeigten Einbausituation;
- Figur 5: die dreidimensionale Darstellung einer Ringscheibe in verbautem Zustand;
- Figur 6: die dreidimensionale Darstellung einer Öffnung im Unterbau mit Aufpolsterung;
- Figur 7: die Seitenansicht eines aufgepolsterten Gegenstands mit eingebauter Vorrichtung;
- Figur 8: die dreidimensionale Darstellung der in Figur 7 dargestellten Einbausituation;
- Figur 9: die halbseitige Darstellung der in Figur 7 dargestellten Einbausituation der Vorrichtung im Längsschnitt;
- Figur 10: die Einzelheit "K" aus Figur 9 in vergrößertem Maßstab;
- Figur 11: die dreidimensionale Darstellung einer Ringscheibe von oben;
- Figur 12: die dreidimensionale Darstellung einer Ringscheibe von unten;
- Figur 13: die dreidimensionale Darstellung einer Ringscheibe mit Zylinder.

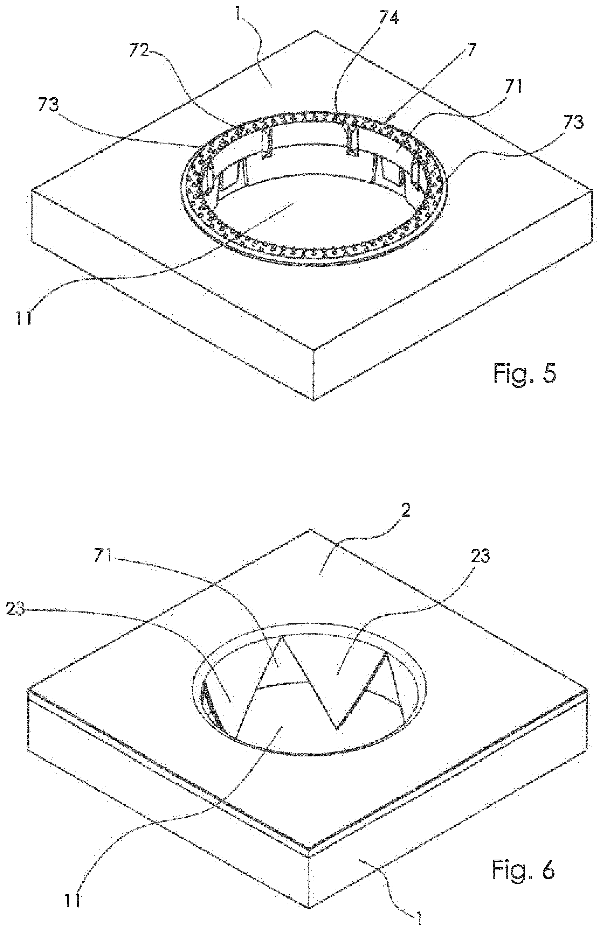

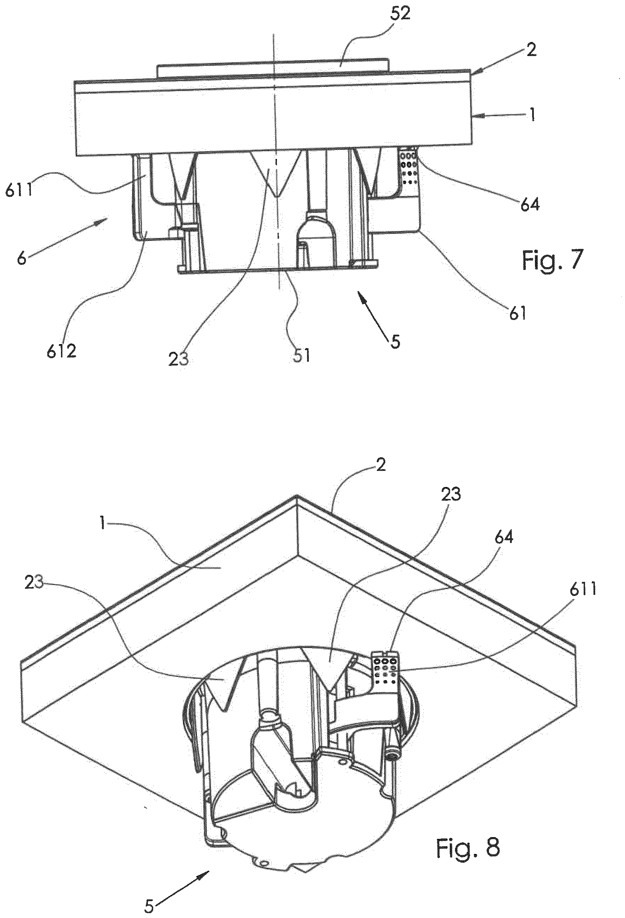

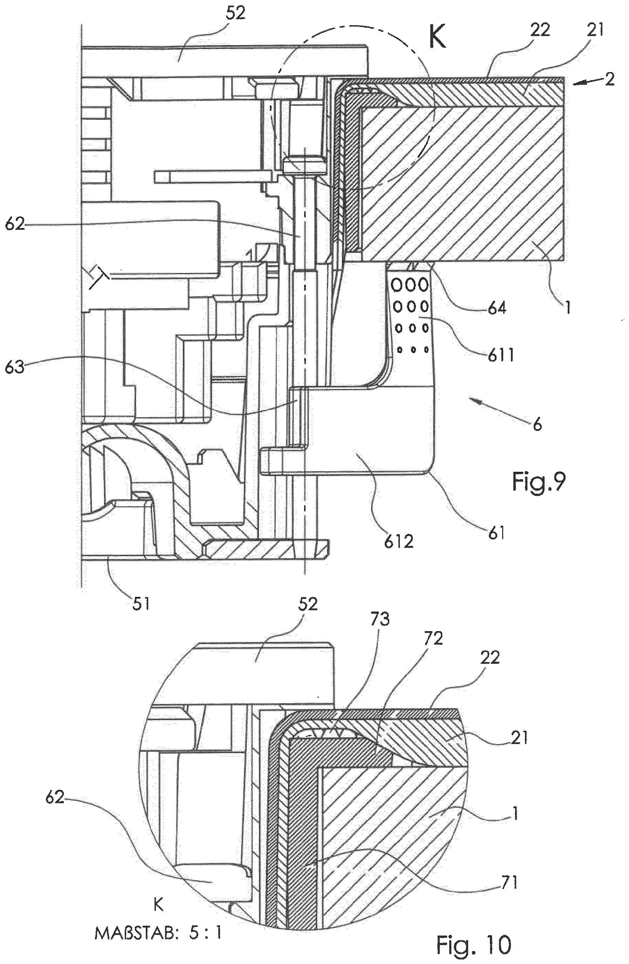

Die erfindungsgemäße Vorrichtung dient zum Einbau von elektrischen Installationsgeräten, insbesondere für den Einbau in aufgepolsterten Gegenständen oder Wänden. In den Ausführungsbeispielen sind die Wände bzw. Gegenstände vereinfacht in Form eines Unterbaus 1 dargestellt, der eine Öffnung 11 für die Vorrichtung aufweist. Der Unterbau 1 ist im Ausführungsbeispiel nach den Figuren 6 bis 10 mit einer Aufpolsterung 2 bezogen. Diese ist von einer Wattierung 21 und einem Bezug 22 beispielsweise aus Leder, Kunstleder oder Stoff, gebildet. Der Bezug 22 bildet die sichtbare Seite der jeweiligen Wand oder des Gegenstands.

Die Vorrichtung umfasst eine Einbaudose 5, die im Ausführungsbeispiel einen Boden 51 aufweist. In Abwandlung des Ausführungsbeispiels kann die Einbaudose 5 auch bodenlos ausgebildet sein. Auf ihrer dem Boden 51 abgewandten Seite ist die Einbaudose 5 mit einem umlaufenden Kragen 52 versehen. Zwischen dem Boden 51 und dem Kragen 52 ist eine im Wesentlichen zylindrische Mantelfläche vorgesehen, die einen Aufnahmebereich 53 ausbildet, in dem die für das jeweils verbaute elektrische Installationsgerät erforderlichen Bauelemente angeordnet sind, die im Ausführungsbeispiel nicht dargestellt sind.

Die Einbaudose 5 ist mit Befestigungsmitteln 6 versehen, die von Klammern 61 gebildet sind. Die Klammern 61 sind über Schrauben 62 bewegbar, die in Aufnahmen 54 der Einbaudose 5 angeordnet sind.

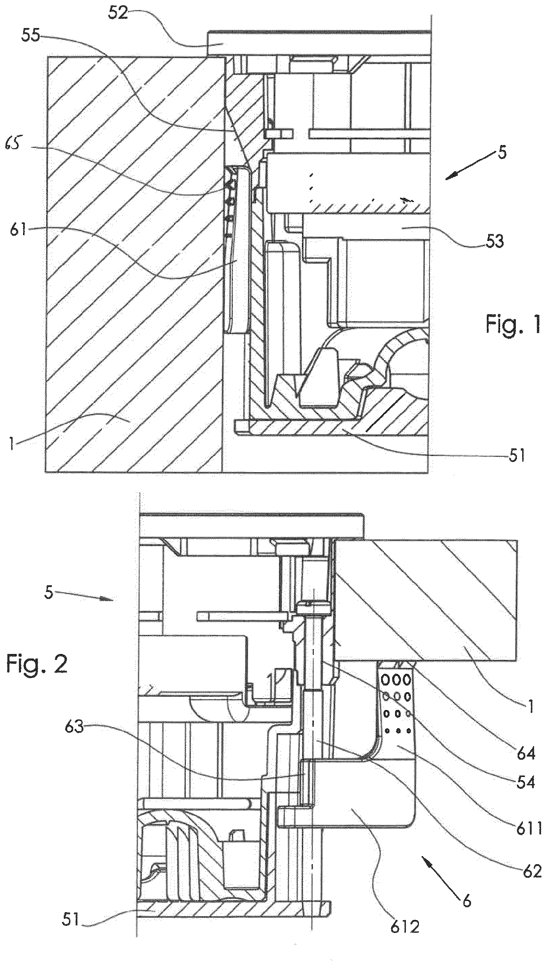

Die Klammern 61 haben im Ausführungsbeispiel eine L-förmige Gestalt, deren einer Schenkel 611 sich parallel zur Längsmittellinie der Einbaudose 5 erstreckt, wohingegen der andere Schenkel 612 rechtwinklig zur Längsmittellinie der Einbaudose 5 ausgerichtet ist. Insgesamt haben die Klammern 61 eine flächige Gestalt, so dass die Außenflächen der Schenkel 611, 612 der Mantelfläche der Einbaudose 5 zugewandt sind und eine zur Längsmittellinie der Einbaudose 5 parallele Ausrichtung haben. Der Schenkel 611 ist vom Schenkel 612 in Richtung des Kragens 52 der Einbaudose 5 ausgerichtet. Vom Schenkel 612 ausgehend verjüngt sich die Dicke des Schenkels 611 in Richtung seines freien Endes. Der Schenkel 611 ist auf seiner der Mantelfläche der Einbaudose 5 abgewandten Seite mit Dornen 65 versehen. Der rechtwinklig ausgerichtete Schenkel 612 hat eine leicht gekrümmte Form und nimmt daher die Form der Öffnung 11 im Unterbau 1 auf. Er weist eine Gewindebohrung 63 auf, die mit dem Gewinde der Schraube 62 korrespondiert. Die Klammern 61 sind über die Kombination von Schraube 62 und Gewindebohrung 63 an der Einbaudose 5 angelenkt und daher ausschwenkbar bzw. spreizbar angeordnet, wobei die Schraube 62 die Schwenkachse definiert. An dem freien Ende des Schenkels 611 ist eine Abstützfläche 64 vorgesehen. An ihrem dem Umfang der Öffnung 11 im Unterbau 1 zugewandten freien Ende sind die Abstützflächen 64 spitz ausgebildet. Die Abstützflächen 64 weisen eine geringe Größe auf. Die Größe ist derart gewählt, dass das spitze, freie Ende der Abstützfläche 64 nicht über den Schenkel 612 radial hervorragt; im Ausführungsbeispiel ragen die Spitzen der Abstützflächen 64 radial genau soweit in Richtung der Wandung der Öffnung 11 wie die Schenkel 612 (vgl. Figur 1).

Die Einbaudose 5 ist in ihrem dem Kragen 52 zugewandten Bereich auf der Mantelfläche außen mit Schrägen 55 versehen, welche eine Durchmessererweiterung des Aufnahmebereichs 52 herbeiführen und die sich in montiertem Zustand der Einbaudose 5 im Bereich der Öffnung 11 im Unterbau 1 befinden.

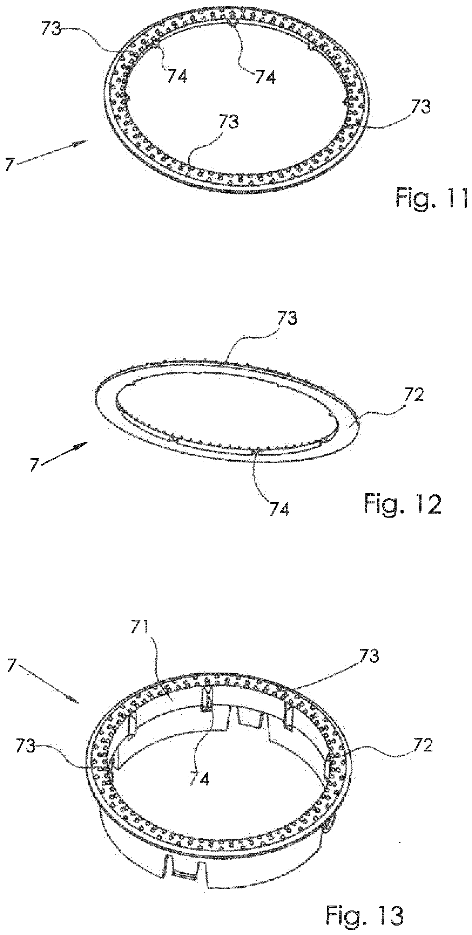

Im Ausführungsbeispiel nach den Figuren 5 bis 10 ist eine Ringscheibe 7 vorgesehen, die an die Öffnung im Unterbau 1 anbaubar ist. Die Ringscheibe 7 ist mit einem umlaufenden Rand 72 versehen. Der Rand 72 liegt in montiertem Zustand auf dem Unterbau 1 auf. Innen ist die Ringscheibe 7 im Ausführungsbeispiel nach den Figuren 11 und 12 mit Vorsprüngen 74 versehen, die radial nach innen ausgerichtet sind und deren freien Enden scharfkantig sind. Auf seiner dem Unterbau 1 abgewandten Seite ist der umlaufende Rand 72 mit einer Oberflächengestaltung versehen, die ein Klemmen der Aufpolsterung 2 ermöglicht. Im Ausführungsbeispiel ist diese Gestaltung von Spitzen 73 gebildet, die jeweils eine Art Dorn ausbilden. Im Ausführungsbeispiel sind die Spitzen 73 ringförmig auf dem Rand 72 angeordnet. In Abwandlung des Ausführungsbeispiels können die Spitzen 73 von Ringen gebildet sein, die sich konzentrisch um den Mittelpunkt der Ringscheibe 7 auf dem Rand 72 erstrecken. In montiertem Zustand korrespondiert der umlaufende Rand 72 mit dem Kragen 52 der Einbaudose 5. An der Ringscheibe 7 kann ein Zylinder 71 vorgesehen sein, wie die in Figur 13 erkennbar ist. Der Zylinder 71 kann dann innen mit den Vorsprüngen 74 versehen sein, die ebenfalls radial ausgerichtet sind und deren freien Enden scharfkantig sind. Die im Ausführungsbeispiel gewählt runde Form der Ringscheibe 7 sowie des Zylinders 71 ist nur eine Art der Gestaltung. Es besteht selbstverständlich auch die Möglichkeit, der Ringscheibe 7 eine mehreckige, beispielsweise viereckige Gestaltung zu geben.

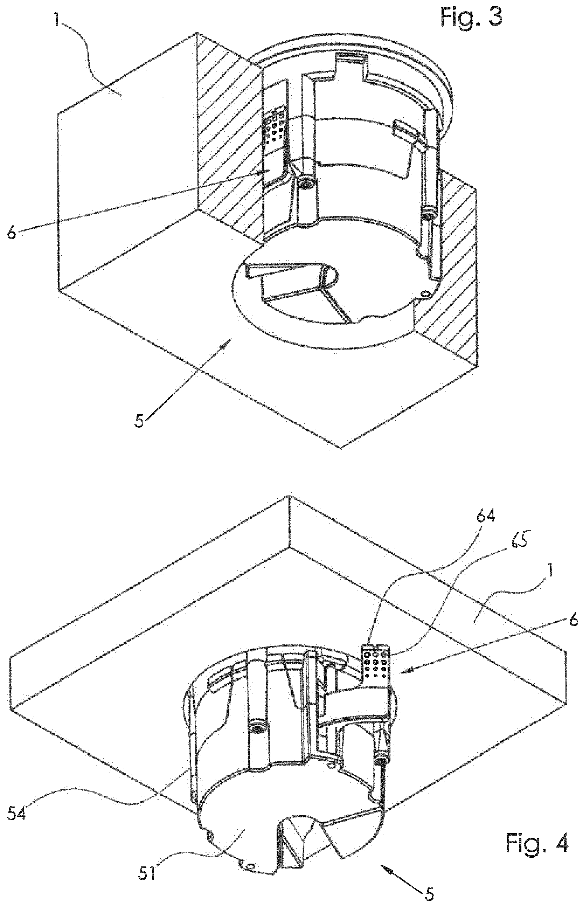

Bei der Montage der erfindungsgemäßen Vorrichtung zum Einbau von elektrischen Installationsgeräten wird die Einbaudose 5 in die Öffnung 11 in den Unterbau 1 eingesetzt, so dass der Kragen 52 auf der Ansichtsseite des Unterbaus 1 aufliegt. Soweit der Unterbau 1 eine Dicke hat, die - wie im Ausführungsbeispiel nach den Figuren 2 und 4 dargestellt - relativ gering ist oder das Material, in das die Einbaudose 5 eingesetzt wird, weich ist, können die Klammern 61 bei Betätigung der Schrauben 62 nach außen schwenken. Beim weiteren Betätigen der Schrauben 62 fahren die Klammern 61 entlang der Schrauben 62 in Richtung des Unterbaus 1 bis die Abstützflächen 64 mit der Rückseite des Unterbaus 1 in Kontakt treten. Bei einem weiteren Verschrauben führt dies zu einem vollständigen Einziehen der Einbaudose 5 in die Öffnung 11 und einer Klemmung zwischen der Abstützfläche 64 und dem Kragen 52, wodurch die Vorrichtung sicher in der Öffnung 11 des Unterbaus 1 gehalten ist.

Hat der Unterbau 1 eine Dicke, die größer ist als der Abstand im Ausgangszustand zwischen der Abstützfläche 64 und dem Kragen 52, besteht für die Klammern 61 nicht die Möglichkeit, bei Betätigung der Schrauben 62 auszuschwenken, wie dies im Ausführungsbeispiel nach den Figuren 1 und 3 dargestellt ist. Bei Betätigung der Schrauben 62 in einer solchen Einbausituation, legen sich die Klammern 61 an der Innenseite der Öffnung 11 an. Bei einem weiteren Betätigen der Schrauben 62 werden die Klammern 61 durch die Schraubbewegung parallel zur Längsmittellinie der Einbaudose 5 in Richtung Unterbau 1 geführt. Diese Bewegung ist unter anderem dadurch ermöglicht, dass die Abstützflächen 64 aufgrund ihrer geringen Größe nicht über die Schenkel 611 hervorragen und somit die Bewegung in der Öffnung 11 nicht behindert ist. Die Klammern 61 treten dann mit dem zur Abstützfläche 64 benachbarten Bereich in Kontakt mit den Schrägen 55, was bei einer weiteren Schraubbewegung zu einer bereichsweisen Spreizung der Klammern 61 führt. Dadurch kommen die freien Enden der Klammern 61 ebenso wie die Dornen 65 in Kontakt mit dem Umfang der Öffnung 11 im Unterbau 1, wodurch eine Klemmwirkung erzielt wird, die ebenfalls zu einer zuverlässigen Anordnung der Vorrichtung in dem Unterbau 1 führt. Diese Art der Befestigung ist nicht geeignet für sehr weiche Materialien des Unterbaus 1, da bei weichen Materialien keine ausreichende Klemmwirkung erzielt werden kann.

Bei Einbau der erfindungsgemäßen Vorrichtung in aufgepolsterte Gegenstände oder Wände, wie dies in den Figuren 5 bis 10 dargestellt ist, wird zunächst die Ringscheibe 7 im Bereich der Öffnung 11 positioniert. Sodann wird die Aufpolsterung 2 im Bereich der Öffnung 11 aufgeschlitzt, wie dies in Figur 6 prinzipiell dargestellt ist, wodurch eingeschnittene Elemente 23 in die Öffnung ragen. Die Aufpolsterung 2 wird über die Ringscheibe 7 gelegt, so dass die eingeschnittenen Enden in die Öffnung 11 der Unterbaus 1 ragen. Im Anschluss wird die Einbaudose 5 in die Öffnung 11 eingeführt. Die eingeschnittenen Elemente 23 der Aufpolsterung 2 kommen dann zur Anlage zwischen dem Zylinder 71 der Ringscheibe 7 und der Mantelfläche der Einbaudose 5. Durch Betätigen der Befestigungsmittel 6 erfolgt wie oben beschrieben eine Spreizung die zum Klemmen der Einbaudose 5 an dem Unterbau 1 mit der Aufpolsterung 2 folgt. Gleichzeitig wird die Aufpolsterung 2 im Bereich des Rands 72 mit den Spitzen 73 der Ringscheibe 7 und dem Kragen 52 der Einbaudose 5 geklemmt. Die Wattierung 21 wird dabei gequetscht, wie dies aus den Figuren ersichtlich ist. Durch die erfindungsgemäße Oberflächengestaltung, welche im Ausführungsbeispiel von den Spitzen 73 gebildet ist, erfolgt eine außerordentlich zuverlässige Befestigung zwischen Kragen 52 und Rand 72. Dadurch ist eine Auszugsicherung der Aufpolsterung 2 aus der Öffnung 11 der Unterbaus 1 hervorgerufen, die auch bei stark beanspruchter Benutzung ein Einreißen der Aufpolsterung 2 oder ein Sichtbarwerden des Unterbaus 1 durch Herausziehen der Aufpolsterung 2 aus der Öffnung 11 verhindert. Die Materialstärke des Rands 72 wird dabei in Abhängigkeit der Dicke der Aufpolsterung 2 gewählt. Hierdurch ist gewährleistet, dass auch bei einer starken bzw. dicken Aufpolsterung 2 die Klemmung der Aufpolsterung 2 zwischen Kragen 52 und Rand 72 gewährleistet ist. Erfindungsgemäß liegt die Ringscheibe 7 auf dem Unterbau 1 auf. Die im Ausführungsbeispiel mit den Spitzen versehene Ringscheibe 7 ist daher in montiertem Zustand unter der Aufpolsterung 2 angeordnet. Der Kragen 52 kommt dabei ohne zusätzliche, die Klemmung erhöhende Mittel wie Spitzen oder Vorsprünge aus, weil die erfindungsgemäß vorgesehene Ringscheibe 7 eine ausreichende Klemmung herbeiführt. Anders als aus dem Stand der Technik bekannt, ist es mit Hilfe der erfindungsgemäßen Ausgestaltung der Vorrichtung nicht erforderlich, einen großflächigen Abdeckrahmen zu verwenden, um das Sichtbarwerden des Unterbaus 1 zu vermeiden.

## Patentansprüche

1. Vorrichtung zum Einbau von elektrischen Installationsgeräten, umfassend einen Einbaudose (5), die von einer Mantelfläche gebildet ist und auf ihrer einen Seite mit einem umlaufenden Kragen (52) versehen ist sowie außen mit Befestigungsmitteln (6) versehen ist, **dadurch gekennzeichnet, dass** eine Ringscheibe (7) vorgesehen ist, die mit einem umlaufenden Rand (72) versehen ist, welcher mit dem Kragen (52) korrespondiert.

2. Vorrichtung nach Anspruch 1, **dadurch gekennzeichnet, dass** der Rand (72) auf ihrer dem Kragen (52) zugewandten Seite mit Spitzen (73) versehen ist.

3. Vorrichtung nach Anspruch 2, **dadurch gekennzeichnet, dass** die Spitzen (73) von Ringen gebildet sind, die sich entlang des Randes (72) erstrecken.

4. Vorrichtung nach einem der vorgenannten Ansprüche, **dadurch gekennzeichnet, dass** an der Ringscheibe (7) ein Zylinder (71) vorgesehen ist.

5. Vorrichtung nach einem der vorgenannten Ansprüche, **dadurch gekennzeichnet, dass** die Ringscheibe (7) mit Vorsprüngen (74) versehen, die radial nach innen ausgerichtet sind und deren freien Enden scharfkantig sind.
